# EUROPÄISCHE PATENTANMELDUNG

(11) **EP 1 385 348 A1**
(43) Veröffentlichungstag der Anmeldung: **28.01.2004**
(21) Anmeldenummer: 02016657.5
(22) Anmeldetag: 25.07.2002
(51) Int. Cl.: H04Q 7/34

(54) **Verfahren und Vorrichtung zur wahrscheinlichkeitstheoretischen Betrachtung insbesondere der Luftschnittstelle eines Funkkommunikationssystems**

(71) Anmelder: SIEMENS AKTIENGESELLSCHAFT, 80333 München (DE)
(72) Erfinder: Blechschmidt, Dierk, 82291 Mammendorf (DE); Eigenmann, Robert, Dr., 81476 München (DE); Obradovic, Dragan, 81669 München (DE); Szabo, Miruna, 85521 Riemerling (DE)

(57) **Zusammenfassung**

Die Erfindung betrifft ein Verfahren zum Erfassen der Wahrscheinlichkeit für das Eintreten eines spezifischen Zustandes eines Funkkommunikationssystems, insbesondere einer Luftschnittstelle in dem Funkkommunikationssystem, über welche mindestens zwei Stationen per Funk kommunizieren. Erfindungsgemäß werden folgende Verfahrensschritte durchgeführt: das Belegen von Prozessvariablen eines wahrscheinlichkeitstheoretischen Modells in Form eines Bayes'schen Netzwerkes, wobei für jede Prozessvariable mindestens ein Zustand zugänglich ist, durch Informationen über die Luftschnittstelle des Funkkommunikationssystems und/oder Parameter der Luftschnittstelle des Funkkommunikationssystems, und das Belegen von bedingten Wahrscheinlichkeiten des Bayes'schen Netzwerkes durch Informationen über kausale Beziehungen zwischen Informationen über die Luftschnittstelle des Funkkommunikationssystems und/oder Parametern der Luftschnittstelle des Funkkommunikationssystems, sowie die Berechnung von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in einer kausalen Beziehung stehenden Prozessvariablen.

## Beschreibung

Die Erfindung betrifft ein Verfahren und eine Vorrichtung in einem Funkkommunikationssystem zum Erfassen der Wahrscheinlichkeit für das Eintreten eines spezifischen Zustandes eines Funkkommunikationssystems, insbesondere einer Luftschnittstelle in dem Funkkommunikationssystem, über welche mindestens zwei Stationen per Funk kommunizieren. Ferner betrifft die Erfindung ein Computerprogrammprodukt zum Erfassen der Wahrscheinlichkeit für das Eintreten eines spezifischen Zustandes eines Funkkommunikationssystems, insbesondere einer Luftschnittstelle in dem Funkkommunikationssystem.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Luftschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für das eingeführte GSM-Mobilfunksystem (Global System for Mobile Communication) werden beispielsweise Frequenzen bei 850, 900, 1800 und 1900 MHz genutzt.

Für zukünftige Mobilfunksysteme mit CDMA- oder TD/CDMA-Übertragungsverfahren wie beispielsweise UMTS (Universal Mobile Telecommunication System) oder andere Systeme der 3. Generation sind für die Funkschnittstelle Frequenzen im Frequenzband von ca. 2000 MHz vorgesehen.

In Kommunikationssystemen mit einer Funkschnittstelle können zeitweilig Fehler bzw. Störungen auftreten, die den planmäßigen Funkbetrieb unmöglich machen, so dass Maßnahmen zur Beseitigung der Mängel ergriffen werden müssen.

Das Auffinden bzw. die Detektion von Fehlern und die Klärung ihrer Ursachen ist bei Funkkommunikationssystemen eine überaus schwierige Aufgabe. Dies lässt sich durch die Komplexität der Kommunikationssysteme, wie z.B. des GSM-Systems erklären. Die meist hierarchisch aufgebauten zellularen Funkkommunikationssysteme sind geprägt durch komplexe dynamische Vorgänge. Hierunter fallen die Ressourcennachfrage der Teilnehmerstationen, welche zeitlich zufällig und somit schwer vorhersehbar ist, die Anzahl an pro Zeiteinheit benötigten Übergabevorgängen zwischen verschiedenen Zellen (Handover) und nichtstationäre Einflüsse der Umgebung, welche Interferenzen verursachen bzw. die Kanalcharakteristik beeinflussen.

Das Auffinden bzw. die Detektion von Fehlern und die Klärung ihrer Ursachen ist dann gefragt, wenn die Übertragungsqualität (Quality of Service, QoS) in einem Teil oder auch in dem ganzen Kommunikationssystem unter einen Akzeptanzwert sinkt. Die Störung, welche der schlechten Übertragungsqualität zugrunde liegt, muss dann identifiziert werden. Weiterhin sollte ein Aufspüren ihrer Ursache erfolgen, so dass dieser entgegengewirkt werden kann, so dass letztendlich die Übertragungsqualität wieder ansteigt.

Bislang wird das Auffinden bzw. die Detektion von Fehlern und die Klärung ihrer Ursachen von Fachleuten, also Menschen -im Gegensatz zu Maschinen-, durchgeführt. Zur Aufklärung der Ursachen von Störungen vergleichen die Fachleute Systemparameter und aktuelle Messungen am Kommunikationssystem mit Erfahrungswerten. Manchmal wurden die Erfahrungswerte von Fachleuten und ihre üblichen Vorgehensweisen in einfache Regeln zusammengefasst. Dadurch kann jedoch nur ein einzelnes auftretendes Problem angegangen werden, die komplexe Wechselwirkung zwischen verschiedenen, gleichzeitig auftretenden, Störungen mit ihren jeweiligen Abhängigkeiten von unterschiedlichen Parametern und Messergebnissen des Kommunikationssystems wird vernachlässigt.

Das Auffinden bzw. die Detektion von Fehlern und die Klärung ihrer Ursachen durch Fachleute wird mit steigender Komplexität der Kommunikationssysteme stetig aufwendiger oder gar undurchführbar. Weiterhin ist der Einsatz von menschlicher Arbeitsleistung in wachsendem Umfang für die Betreiber des Kommunikationssystems eine große wirtschaftliche Belastung.

Der Komplexität der Funkkommunikationssysteme und der auftretenden Phänomene lässt sich nur Rechnung tragen, wenn die Interdependenzen der verschiedenen Parameter, Störungen und Messwerte berücksichtigt wird. Hierzu sollte der Gesamtzustand des Funkkommunikationssystems überwacht werden, und nicht nur z.B. das Auftreten einzelner Störungen. Die Erfassung des aktuellen spezifischen Zustandes des Funkkommunikationssystems, insbesondere einer Luftschnittstelle in dem Funkkommunikationssystem, ermöglicht eine realistische Einschätzung der Situation an der Luftschnittstelle und eine sinnvolle Entscheidung über potentielle Maßnahmen zur Verbesserung dieser Situation.

Eine geeignete Methode, ein System bestehend aus einer großen Anzahl an Variablen, welche voneinander abhängen, darzustellen und zu analysieren, ist die Verwendung von Bayes'schen Netzwerken. Unter Bayes'schen Netzwerken (auch kausale Netze genannt) versteht man graphische wahrscheinlichkeitstheoretische Modelle, welche die kausalen Beziehungen zwischen verschiedenen Variablen beschreiben. Visuell dargestellt gleicht dieses Modell einem Netzwerk, bestehend aus Knoten, welche die Prozessvariablen darstellen, und deren jeweiligen Verbindungen. Die Prozessvariablen können eine Anzahl an diskreten Zuständen annehmen. Man kann hierbei von den für eine Prozessvariable zugänglichen Zuständen sprechen. Die Verbindungen zwischen den Prozessvariablen stehen für eine kausale Abhängigkeit zwischen den Variablen, die sich an ihren Startund Endpunkten befinden. In Form von Pfeilen können die Verbindungen auch die Richtungen der kausalen Abhängigkeiten repräsentieren. Das Bayes'sche Netzwerk ist vollständig bestimmt, wenn die Knoten, d.h. die Prozessvariablen, sowie die kausalen Zusammenhänge zwischen den Knoten und die bedingten Wahrscheinlichkeiten bekannt sind. Unter einer bedingten Wahrscheinlichkeit versteht man die Wahrscheinlichkeit dafür, dass eine Variable einen bestimmten Wert annimmt, unter der Bedingung, dass andere Variable andere, festgelegte Werte annehmen. Eine ausführliche Beschreibungen von Bayes'schen Netzwerken findet man z.B. in Pearl, J.: "Probabilistic Reasoning in Intelligent Systems (Morgan Kaufmann, San Mateo, CA, 1988). A classic text on Bayesian networks.".

Der Erfindung liegt die Aufgabe zugrunde, ein Verfahren, eine Vorrichtung und ein Computerprogrammprodukt vorzustellen, welches ein effizientes Erfassen des Zustands der Funkschnittstelle eines Funkkommunikationssystems unter Berücksichtigung der zahlreichen Interdependenzen, die solch ein komplexes System aufweist, ermöglicht.

Dieses Aufgabe wird durch die Merkmale des Anspruchs 1 gelöst. Das eingangs genannte Verfahren zum Erfassen der Wahrscheinlichkeit für das Eintreten eines spezifischen Zustandes eines Funkkommunikationssystems, insbesondere einer Luftschnittstelle in dem Funkkommunikationssystem umfasst zwei Verfahrensschritte:
(a) Belegen von Prozessvariablen eines wahrscheinlichkeitstheoretischen Modells in Form eines Bayes'schen Netzwerkes, wobei für jede Prozessvariable mindestens ein Zustand zugänglich ist, durch Informationen über die Luftschnittstelle des Funkkommunikationssystems und/oder Parameter der Luftschnittstelle des Funkkommunikationssystems, und dem Belegen von bedingten Wahrscheinlichkeiten des Bayes'schen Netzwerkes durch Informationen über kausale Beziehungen zwischen Informationen über die Luftschnittstelle des Funkkommunikationssystems und/oder Parametern der Luftschnittstelle des Funkkommunikationssystems;
(b) ferner Berechnung von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in einer kausalen Beziehung stehenden Prozessvariablen.

Für jede Prozessvariable muss mindestens ein Zustand zugänglich sein. Beispiele für zugängliche Zustände sind eine Reihe von Messwerten, die Zustände JA und NEIN als Beispiel für zwei zugängliche Zustände, die Zustände KLEIN, MITTEL und GROß als Beispiel für drei zugängliche Zustände, usw.

Da bei der Berechnung der Wahrscheinlichkeiten für die Prozessvariablen das Bayes'sche Netzwerk verwendet wird, unterliegen diese Berechnungen gewissen Regeln (Formel von Bayes), welche beinhalten, dass bestimmte Summen über Wahrscheinlichkeiten den Wert eins haben müssen.

Die Verwendung von Bayes'schen Netzwerken hat dabei einige Vorteile gegenüber anderen Methoden wie z.B. fuzzy logic, Regelwerken oder Entscheidungsbäumen, welche auch zur Modellierung des gegebenen Sachverhaltes verwendet werden könnten:
◆ Bayes'sche Netzwerke erlauben eine intuitive graphische Darstellung. Dadurch wird die Überprüfung der verwendeten Prozessvariablen und ihre Interdependenzen auf Anwendbarkeit für das zu untersuchende Funkkommunikationssystem erleichtert.
◆ Ändert man in einem Bayes'schen Netzwerk den Wert einer Prozessvariablen, so wird aufgrund der kausalen Beziehungen dieser Prozessvariablen zu den anderen Prozessvariablen der Einfluss dieser Änderung auf alle anderen Prozessvariablen sichtbar. Man kann somit von einem bezüglich des betrachteten Funkkommunikationssystems "globalen" Modell sprechen, da nicht nur Einflüsse auf einzelne Bereiche, sondern auf das gesamte System berücksichtigt werden.
◆ Da die bedingten Wahrscheinlichkeiten innerhalb des Bayes`schen Netzwerkes bestimmte Bedingungen erfüllen müssen, d.h. der Beschränkung unterliegen, dass Summen über Wahrscheinlichkeiten den Wert eins ergeben müssen, sind Berechnungen innerhalb des Bayes'schen Netzwerkes konsistent.
◆ Bayes'sche Netzwerke erlauben die Kombination mit anderen Modellen.
◆ Die Prozessvariablen eines Bayes'schen Netzwerkes können durch verschiedenartige Variablen belegt werden, welche unterschiedliche Bedeutung in Bezug auf des untersuchte Funkkommunikationssystem haben. So sind unterschiedliche Anwendungen des erfindungsgemäßen Verfahrens möglich. Von besonderem Interesse ist die Belegung von Prozessvariablen durch Störungen bzw. Fehler im Bereich der Luftschnittstelle, so dass die Störanfälligkeit der Luftschnittstelle überprüft werden kann.
◆ Aufgrund der Tatsache, dass die Wahrscheinlichkeiten für die verschiedenen zugänglichen Zustände der Prozessvariablen berechnet werden, können bei der Angabe der Ergebnisse der Berechnungen Sicherheitsgrenzen bzw. Konfidenzbereiche angegeben werden.
◆ Die Richtung, in welche eine Schlussfolgerung gezogen werden soll, ist bei den Bayes'schen Netzwerken nicht vorgegeben. So kann prinzipiell jegliche Prozessvariable, unabhängig von ihrer Funktion im betrachteten System, d.h. im Funkkommunikationssystem, geändert werden und der Einfluss dieser Änderung auf die anderen Prozessvariablen beobachtet werden. Dies ist z.B. bei Entscheidungsbäumen nicht möglich. Hierbei kann der Einfluss einer Variable, welche nach einer Verzweigung liegt, auf eine Variable, welche vor der gleichen Verzweigung liegt, nicht überprüft werden.

Das erfindungsgemäße Verfahren wird vorteilhaft auf ein GSM-System angewandt. Jedoch ist es nicht auf dieses beschränkt und es kann grundsätzlich auch jedes andere Funkkommunikationssystem mit dem erfindungsgemäßen Verfahren untersucht werden.

Weiterhin wird die Aufgabe für die Vorrichtung gelöst durch die Merkmale des Anspruchs 19. Die Vorrichtung in einem Funkkommunikationssystem dient zum Erfassen der Wahrscheinlichkeit für das Eintreten eines spezifischen Zustandes des Funkkommunikationssystems, insbesondere einer Luftschnittstelle in dem Funkkommunikationssystem, über welche mindestens zwei Stationen per Funk kommunizieren. Sie umfasst
- Mittel zum Belegen von
   - Prozessvariablen eines wahrscheinlichkeitstheoretischen Modells in Form eines Bayes'schen Netzwerkes, wobei für jede Prozessvariable mindestens ein Zustand zugänglich ist, durch Informationen über die Luftschnittstelle des Funkkommunikationssystems und/oder Parameter der Luftschnittstelle des Funkkommunikationssystems, und von
   - bedingten Wahrscheinlichkeiten des Bayes' schen Netzwerkes durch Informationen über kausale Beziehungen zwischen Informationen über die Luftschnittstelle des Funkkommunikationssystems und/oder Parameter der Luftschnittstelle des Funkkommunikationssystems, und
- Mittel zum Berechnen von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in kausaler Beziehung stehenden Prozessvariablen.

Die Vorteile dieser Vorrichtung entsprechen den oben genannten für die Bayes'schen Netzwerke.

Vorteilhafte Ausgestaltungen der erfindungsgemäßen Vorrichtung und des Verfahrens finden sich in den Unteransprüchen.

Die Vorrichtung kann z.B. in einer Recheneinheit innerhalb des Funkkommunikationssystems umgesetzt sein.

Die erfindungsgemäße Vorrichtung enthält vorteilhafterweise eine Datenbank, welche Informationen über die Luftschnittstelle des Funkkommunikationssystems und/oder Parameter der Luftschnittstelle des Funkkommunikationssystems und/oder Informationen über kausale Beziehungen zwischen diesen Informationen und/oder Parametern umfasst. Diese Datenbank dient als Stütze für die Mittel, welche die Prozessvariablen und die bedingten Wahrscheinlichkeiten des Bayes'schen Netzwerkes belegen. Dies bedeutet jedoch nicht, dass das Mittel zum Belegen die Prozessvariablen und die bedingten Wahrscheinlichkeiten des Bayes'schen Netzwerkes mit den Inhalten der Datenbank belegen muss, der Inhalt der Datenbank also mit den Prozessvariablen und den bedingten Wahrscheinlichkeiten nach Belegung übereinstimmt. Vielmehr kann das Mittel zum Belegen z.B. eine Auswahl aus den Inhalten der Datenbank treffen, oder diesen Inhalt auf geeignete Weise manipulieren.

In Weiterbildung der Erfindung ist bei der erfindungsgemäßen Vorrichtung eine Einrichtung zur Darstellung einer graphischen Benutzeroberfläche vorgesehen. Unter einer graphischen Benutzeroberfläche versteht man eine visuelle Oberfläche, genannt Fenster (Window), die Symbole für die Darstellung von Arbeitsflächenobjekten verwendet, die vom Benutzer mit einer Positionierungseinheit (z.B. Maus) manipuliert werden können (Graphical User Interface, GUI).

In einer Weiterbildung der Erfindung findet die Belegung der Prozessvariablen und bedingten Wahrscheinlichkeiten nach Verfahrensschritt (a) unter Verwendung einer Datenbank, welche Informationen über die Luftschnittstelle des Funkkommunikationssystems und/oder Parameter der Luftschnittstelle des Funkkommunikationssystems und/oder Informationen über kausale Beziehungen zwischen diesen Informationen und/oder Parametern umfasst, statt. Eine derartige Datenbank könnte z.B. eine Microsoft Access Datenbank sein. Der Inhalt der zur Belegung verwendeten Datenbank muss dabei nicht identisch sein mit den Informationen und/oder Parametern, mit welchen die Prozessvariablen belegt werden und mit den Informationen über kausale Zusammenhänge, mit denen die bedingten Wahrscheinlichkeiten des Bayes'schen Netzwerkes belegt werden.

Zur Erstellung der Datenbank kann vorzugsweise eine erste graphische Benutzeroberfläche eingesetzt werden, welche Informationen über die Luftschnittstelle des Funkkommunikationssystems und/oder Parameter der Luftschnittstelle des Funkkommunikationssystems und/oder Wahrscheinlichkeiten zur Beschreibung von kausalen Beziehungen zwischen diesen Informationen und/oder Parametern abfragt. Dadurch kann das Wissen und die Erfahrung des Fachmanns bezüglich des betrachteten Funkkommunikationssystems extrahiert werden. Die Abfrage sollte so ausgestaltet sein, dass keine Kenntnisse des Fachmanns bezüglich Bayes'scher Netzwerke notwendig sind.

In einer Ausgestaltung der Erfindung werden bei einer Veränderung in der Datenbank die oben beschriebenen Verfahrensschritte (a) und (b) erneut durchgeführt. Ändert sich also z.B. ein Parameter des Funkkommunikationssystems, so kann diese Änderung in der Datenbank vollzogen werden, woraufhin das erfindungsgemäße Verfahren erneut durchgeführt wird. Somit stehen die Wahrscheinlichkeiten für die Zustände der Prozessvariablen unter den veränderten Bedingungen zur Verfügung.

In einer bevorzugten Ausführungsform der Erfindung werden die zur Berechnung der Wahrscheinlichkeiten nach Verfahrensschritt (b) verwendeten Informationen mit Hilfe einer zweiten graphischen Oberfläche abgefragt. Diese zweite graphische Oberfläche umfasst vorzugsweise eine graphische Darstellung des wahrscheinlichkeitstheoretischen Modells. Mit Hilfe dieser Darstellung kann der Fachmann überprüfen, ob die Modellierung des Funkkommunikationssystems durch das Bayes'sche Netzwerk sinnvoll ist. Enthält das Modell Mängel, so können diese z.B. durch eine Änderung in der oben beschriebenen Datenbank beseitigt werden. Weiterhin läuft vorzugsweise der Verfahrensschritt (b) erneut ab, wenn die mit Hilfe der zweiten graphischen Oberfläche abgefragte Information verändert wurde. Dieser Schritt entspricht einer Aktualisierung des berechneten Zustandes des Funkkommunikationssystems. Hierdurch ist ein iteratives Herantasten an Ergebniswerte möglich, dadurch, dass die Information bezüglich einer Prozessvariablen Schritt für Schritt geändert wird.

In einer Weiterbildung der Erfindung werden die zur Berechnung der Wahrscheinlichkeiten nach Verfahrensschritt (b) verwendeten Informationen vom Funkkommunikationssystem zur Verfügung gestellt. Dieses Zur-Verfügung-Stellen erfolgt insbesondere automatisch, also ohne Aufforderung. Hierbei ist z.B. daran zu denken, dass bei abgeschlossener Messung eines Wertes am Funkkommunikationssystem dieser Wert nicht über die zweite graphische Benutzeroberfläche abgefragt wird, sondern direkt vom Funkkommunikationssystem dem Verfahren zugeführt wird.

Eine Ausgestaltung des erfindungsgemäßen Verfahrens beinhaltet, dass die Prozessvariablen zu mindestens einer Gruppe zusammengefasst werden, wobei die Prozessvariablen innerhalb der mindestens einen Gruppe bei Verwendung von mindestens zwei Gruppen nicht in kausaler Beziehung zueinander stehen. Prozessvariablen, welche nicht in kausaler Beziehung zueinander stehen, sind voneinander unabhängig. Demnach bedeutet die Verwendung von nur einer Gruppe, dass alle Prozessvariablen in einer kausalen Beziehung zu allen anderen Prozessvariablen stehen können. Wird dagegen mehr als eine Gruppe gebildet, so sind die Prozessvariablen innerhalb einer Gruppe voneinander unabhängig. In der graphischen Darstellung des Bayes'schen Netzwerkes ist dann zu erkennen, dass die Prozessvariablen der gleichen Gruppe nicht durch Linien bzw. Pfeile verbunden sind.

In einer Weiterbildung der Erfindung wird unter der Bedingung, dass bei der Belegung des Bayes'schen Netzwerkes nach Verfahrensschritt (a) das Bayes'sche Netzwerk unterbestimmt ist, mindestens eine Gruppe von Prozessvariablen verwendet, welche Annahmen über die Luftschnittstelle des Funkkommunikationssystems beinhalten, aufgrund welcher das Bayes'sche Netzwerk vollständig bestimmt ist. Die zu diesem Zweck verwendeten Prozessvariablen können als Hilfsvariablen bezeichnet werden. Fehlen z.B. bei der Belegung der Prozessvariablen Informationen über bestimmte Parameter des Funkkommunikationssystems, so können die Hilfsvariablen eingesetzt werden, um diese Lücken zu füllen und somit Berechnungen von Wahrscheinlichkeiten erlauben.

In einer bevorzugten Ausführungsform der Erfindung umfassen die Prozessvariablen des wahrscheinlichkeitstheoretischen Modells drei Gruppen:
i. eine erste Gruppe mit Variablen, welche mindestens eine Eigenschaft der Luftschnittstelle des Funkkommunikationssystems beschreiben;
ii. eine zweite Gruppe mit Variablen, welche mindestens einen Fehler an der Luftschnittstelle beschreiben;
iii. eine dritte Gruppe mit Variablen, deren zugängliche Zustände aus Ergebnissen von mindestens einer Messungen am und/oder vom Funkkommunikationssystem gewonnen werden.

Die Aufteilung der Prozessvariablen in diese Gruppen erleichtern die Durchführung des Verfahrens, da die Variablen innerhalb der Gruppen voneinander unabhängig sind, die modellhafte Abbildung des Funkkommunikationssystems dadurch also weniger komplex ist. Außerdem fällt mit Hilfe dieser speziellen Aufteilung die systematische Erfassung der Erfahrung des Fachmanns bezüglich des Funkkommunikationssystems leichter. Die inhaltliche Aufteilung der Variablen in diese drei Gruppen unterliegt folgender Logik: die Eigenschaften der Luftschnittstelle beeinflussen die Fehler bzw. Störungen, die an der Luftschnittstelle auftreten können. Diese Störungen wiederum beeinflussen die Ergebnisse, welche man bei Messungen am Funkkommunikationssystem erhält.

Vorzugsweise sind für die Variablen der zweiten Gruppe zwei Zustände zugänglich: ein Zustand für das Eintreten des Fehlers und ein Zustand für das Ausbleiben des Fehlers. Diese Zustände könnte man mit JA und NEIN bezeichnen. Liefert die Berechnung der Wahrscheinlichkeiten gemäß Verfahrensschritt (b) z.B. eine Wahrscheinlichkeit von 99 % für den JA-Zustand eines bestimmten Fehlers, so ist damit zu rechnen, dass der Fehler unter den gegebenen Umständen, welche durch die zur Berechnung der Wahrscheinlichkeiten verwendeten Eigenschaften und Messungen gegeben sind, auftritt.

In Weiterbildung der Erfindung umfassen die zur Berechnung der Wahrscheinlichkeiten nach Verfahrensschritt (b) verwendeten Informationen
- mindestens einen Wahrscheinlichkeitswert für mindestens einen zugänglichen Zustand von mindestens einer Variable der ii. Gruppe und/oder
- mindestens einen Wahrscheinlichkeitswert für mindestens einen zugänglichen Zustand von mindestens einer Variable der iii. Gruppe und/oder
- mindestens einen Ergebniswert von Messungen am und/oder vom Funkkommunikationssystem für mindestens eine Variable der iii. Gruppe.

Die beschriebenen verschiedenen Möglichkeiten, Informationen zur Berechnung zur Verfügung zu stellen, haben folgende Bedeutung: bezüglich des Wahrscheinlichkeitswertes für einen zugänglichen Zustand von einer Variable der ii. Gruppe kann man an den Fall denken, dass für einen bestimmten Fehler die Wahrscheinlichkeit, dass dieser Fehler auftritt, auf 100 % gesetzt wird. Dann ist es von Interesse, die Ergebnisse der Berechnungen für die Variablen der iii. Gruppe zu analysieren, um zu wissen, welche Messungen in Zusammenhang mit diesem Fehler von besonderem Interesse sind. Liegen z.B. keine exakten Ergebniswerte von Messungen vor, so kann eine Wahrscheinlichkeit dafür angegeben werden, dass der Ergebniswert in einem bestimmten Bereich liegt. Wird diese Wahrscheinlichkeit bei einer Variablen der iii. Gruppe verwendet, so kann trotz des Mangels eines exakten Ergebnisses die Wahrscheinlichkeiten für die Variablen der ii. Gruppe berechnet werden. Die dritte genannte Möglichkeit entspricht dagegen dem Fall, dass exakte Ergebnisse von Messungen vorliegen, welche dann als Grundlage für die weitere Berechnung herangezogen werden können.

Die verschiedenen Arten, Informationen zur Berechnung von Wahrscheinlichkeiten nach Verfahrensschritt (b) zur Verfügung zu stellen, korrespondieren zu den oben bereits erwähnten verschiedenen Richtungen, in welche schlussgefolgert wird. Die Verwendung von Information in Form eines Wahrscheinlichkeitswertes für Variablen der ii. Gruppe ist einer Schlussfolgerung in Vorwärtsrichtung (d.h. logisch von der Ursache zur Folge) zuzuordnen. Die Verwendung von Informationen für Variablen der iii. Gruppe, sei es in Form von Wahrscheiniichkeitswerten oder von Ergebniswerten, entspricht dagegen einer Schlussfolgerung in Rückwärtsrichtung (d.h. logisch von der Folge zur Ursache).

In einer Weiterbildung der Erfindung wird nach der Berechnung der Wahrscheinlichkeiten nach Verfahrensschritt (b) eine Prozessvariable als Ergebnis ausgegeben, welche im Vergleich zu den weiteren Prozessvariablen der gleichen Gruppe den höchsten Wahrscheinlichkeitswert für einen ihres mindestens einen zugänglichen Zustand aufweist. Hierbei werden also innerhalb einer Gruppe die Wahrscheinlichkeiten für alle innerhalb dieser Gruppe zugänglichen Zustände verglichen. Die Prozessvariable, welche den höchsten von all diesen Werten aufweist, wird als Ergebnis ausgegeben. Ein Beispiel hierzu wäre bei einer Schlussfolgerung in Vorwärtsrichtung ein Vergleich der Wahrscheinlichkeiten für alle zugänglichen Zustände aller Variablen der iii. Gruppe. Diejenige Messung, von welcher ein Ergebnis die höchste Wahrscheinlichkeit im Vergleich zu allen anderen Wahrscheinlichkeiten aller anderen Messungen aufweist, sollte durchgeführt werden.

In einer anderen Weiterbildung der Erfindung wird nach der Berechnung der Wahrscheinlichkeiten nach Verfahrensschritt (b) eine Prozessvariable als Ergebnis ausgegeben, welche im Vergleich zu den weiteren Prozessvariablen der gleichen Gruppe den höchsten Wahrscheinlichkeitswert für einen bestimmten zugänglichen Zustand aufweist. Hierbei werden also innerhalb einer Gruppe die Wahrscheinlichkeiten für einen bestimmten, festgelegten Zustand verglichen. Die Prozessvariable, welche den höchsten von diesen Werten aufweist, wird als Ergebnis ausgegeben. Ein Beispiel hierzu wäre bei einer Schlussfolgerung in Rückwärtsrichtung der Vergleich der Wahrscheinlichkeiten für den JA-Zustand der Variablen der ii. Gruppe. Derjenige Fehler, welcher die höchste Wahrscheinlichkeit für diesen Zustand aufweist, ist derjenige, welcher am sorgfältigsten überprüft werden sollte.

In einer bevorzugten Ausführungsform der Erfindung werden nach der Berechnung der Wahrscheinlichkeiten nach Verfahrensschritt (b) abhängig von diesen Ergebnissen Maßnahmen ergriffen, welche einen Bericht an deinen Netzwerkbetreiber und/oder Vorschläge bzw. Anweisungen zur Änderung der aktuellen Situation und/oder Vorschläge bzw. Anweisungen für Messungen am und/oder vom Kommunikationssystem umfassen. Dadurch können die Ergebnisse, welche das erfindungsgemäße Verfahren liefert, effektiv und ohne Zeitverlust umgesetzt werden.

Vorzugsweise beziehen sich die Informationen über die Luftschnittstelle des Funkkommunikationssystems und die Parameter der Luftschnittstelle des Funkkommunikationssystems und die Informationen über kausale Beziehungen zwischen den Informationen über die Luftschnittstelle des Funkkommunikationssystems und/oder den Parametern der Luftschnittstelle des Funkkommunikationssystems auf genau eine Funkzelle des Funkkommunikationssystems. Somit kann das ganze Funkkommunikationssystem Zelle um Zelle untersucht werden.

In einer bevorzugten Ausführungsform der Erfindung wird das erfindungsgemäße Verfahren auf das Auffinden bzw. die Detektion von Störungen an der Funkschnittstelle des Funkkommunikationssystems und die Klärung ihrer jeweiligen Ursachen angewendet. Aufgrund der Erfassung der Interdependenzen der verschiedenen Prozessparameter umgeht das erfindungsgemäße Verfahren die Unzulänglichkeiten bisheriger "manueller" Methoden zur Fehlersuche an der Funkschnittstelle komplexer Funkkommunikationssysteme.

Das erfindungsgemäße Computerprogrammprodukt zum Erfassen der Wahrscheinlichkeit für das Eintreten eines spezifischen Zustandes eines Funkkommunikationssystems, insbesondere einer Luftschnittstelle in dem Funkkommunikationssystem, über welche mindestens zwei Stationen per Funk kommunizieren umfasst:
- einen ersten Programmteil, welcher mittels einer ersten graphischen Benutzeroberfläche Informationen über die Luftschnittstelle des Funkkommunikationssystems und/oder Parameter der Luftschnittstelle des Funkkommunikationssystems und/oder Informationen über kausale Beziehungen zwischen Informationen über die Luftschnittstelle und/oder Parametern der Luftschnittstelle des Funkkommunikationssystems abfragt und sie dann in einer Datenbank ablegt, sowie
- einen zweiten Programmteil, welcher unter Verwendung der im ersten Programmteil eingesetzten Datenbank Prozessvariablen eines wahrscheinlichkeitstheoretisches Modells in Form eines Bayes'schen Netzwerkes, wobei für jede Prozessvariable mindestens ein Zustand zugänglich ist, durch Informationen über die Luftschnittstelle des Funkkommunikationssystems und/oder durch Parameter der Luftschnittstelle des Funkkommunikationssystems belegt, und bedingte Wahrscheinlichkeiten des Bayes'schen Netzwerkes durch Informationen über kausale Beziehungen zwischen Informationen über die Luftschnittstelle des Funkkommunikationssystems und/oder Parametern der Luftschnittstelle des Funkkommunikationssystems belegt, und gegebenenfalls
- einen dritten Programmteil, welcher das in zweiten Programmteil bearbeitete wahrscheinlichkeitstheoretische Modell mittels einer zweiten graphischen Benutzeroberfläche visualisiert und Eingaben des Benutzers zur Veränderung des Inhaltes der im ersten Programmteil eingesetzten Datenbank zulässt, und schließlich
- einen vierten Programmteil, welcher eine Berechnung von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in kausaler Beziehung stehenden Prozessvariablen durchführt.

Der dritte Programmteil muss nicht notwendigerweise vorhanden sein. Er weist jedoch deutliche Vorteile auf. So kann ein Fachmann unter Verwendung des dritten Programmteils vor den Berechnungen, welche im vierten Programmteil erfolgen, überprüfen, ob die modellhafte Abbildung des Funkkommunikationssystems eventuell verbesserungswürdig ist und potentielle Modifikationen vornehmen.

Bei dem erfindungsgemäßen Computerprogrammprodukt werden vorzugsweise die im vierten Programmteil verwendeten Informationen bezüglich der mindestens einen Prozessvariablen mittels einer dritten graphischen Benutzeroberfläche abgefragt.

Einzelheiten und Details der Erfindung werden anhand eines Ausführungsbeispiels im folgenden erläutert. Dabei zeigen
- Fig. 1: Schema eines beispielhaften zeitlichen Ablaufs der Fehlerdetektion unter Benutzung des erfindungsgemäßen Verfahrens,
- Fig. 2: Schema einer beispielhaften Realisierung eines Bayes'sches Netzwerkes für ein Funkkommunikationssystem nach dem erfindungsgemäßen Verfahren.

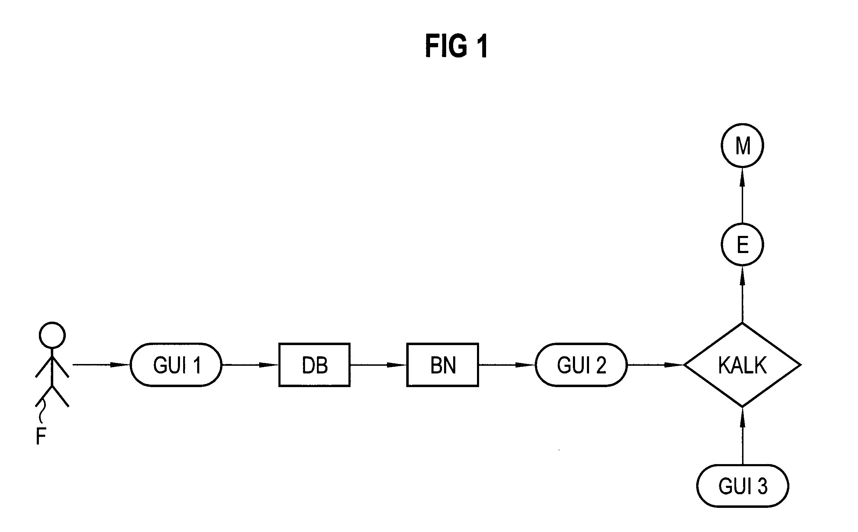

In Figur 1 ist beispielhaft der zeitliche Ablauf des erfindungsgemäßen Verfahrens dargestellt, wobei im gezeigten Fall anhand des Verfahrens festgestellt werden soll, welche Störung im gegenwärtigen Zustand des Funkkommunikationssystems am ehesten zu erwarten ist.

Der Fachmann F wird mittels der ersten graphischen Benutzeroberfläche GUI1 (GUI: Graphical User Interface) aufgefordert, seine Erfahrungen bezüglich des zu untersuchenden Funkkommunikationssystems einzugeben. Dies wird in einer Datenbank DB abgelegt. Nun erfolgt der Verfahrensschritt (a), in dem die Prozessvariablen und bedingten Wahrscheinlichkeiten eines Bayes'schen Netzwerkes BN durch Informationen, welche in der Datenbank DB gespeichert sind, belegt werden. Mittels einer zweiten graphischen Benutzeroberfläche GUI2 kann die modellhafte Abbildung des Funkkommunikationssystems betrachtet werden. Auch können unter Verwendung dieser zweiten graphischen Benutzeroberfläche GUI2 Modifikationen am Bayes'schen Netzwerk vorgenommen werden. Dieses Netzwerk wird im Verfahrensschritt (b) zur Berechnung KALK von Wahrscheinlichkeiten eingesetzt. Hierzu werden Informationen über mindestens einen der Prozessvariablen benötigt. Diese Informationen werden mittels unter Verwendung einer dritten graphischen Benutzeroberfläche GUI3 zur Verfügung gestellt. Diese dritte graphische Benutzeroberfläche GUI3 ist eine Darstellung des mit den Informationen aus der Datenbank belegten Bayes'schen Netzwerkes BN. Der Fachmann kann dieses wahrscheinlichkeitstheoretische Modell -wie auch mittels der zweiten graphischen Benutzeroberfläche GUI2- nun visuell auf Übereinstimmung mit seinen Erfahrungswerten überprüfen. Stellt er Mängel fest, so kann er seine Eingaben in der ersten graphischen Benutzeroberfläche GUI1 verändern, so dass das Verfahren von diesem Punkt weiterläuft. Ziel des Verfahrens in diesem Beispiel ist es, den am wahrscheinlichsten auftretenden Fehler zu ermitteln. Daher ist es erforderlich, mittels der dritten graphischen Benutzeroberfläche GUI3 Informationen über erfolgte Messungen am Funkkommunikationssystem zu liefern, um den aktuell vorliegenden Zustand möglichst genau zu spezifizieren. Somit können die Wahrscheinlichkeiten für das Auftreten der einzelnen Fehler im Verfahrensschritt KALK berechnet werden. Derjenige Fehler, welcher die größte Wahrscheinlichkeit für den JA-Zustand aufweist, wird als Ergebnis ausgegeben. Als Reaktion auf dieses Ergebnis können dann zum Abschluss des Verfahrens Maßnahmen eingeleitet werden, welche dem Auftreten der erwarteten Störung entgegenwirken.

Eine Abfrage mittels der ersten graphischen Benutzeroberfläche bei Verwendung von drei Gruppen von Variablen könnte z.B. folgendes beinhalten: Nennung des Namens einer Störung, einschließlich einer Kurzbeschreibung; Häufigkeit des Auftretens der Störung; Bereich des Funkkommunikationssystems, auf welchen sich die Störung erstreckt; kausale Beziehung zwischen der Störung und den Parametern des Funkkommunikationssystems, einschließlich einer Häufigkeitsangabe, in wie vielen Prozent der Fälle, in welchen die Störung auftritt, die kausale Beziehung besteht; messbare Folgen der Störung, einschließlich einer Häufigkeitsangabe, in wie vielen Prozent der Fälle, in welchen die Störung auftritt, diese messbare Folge in welchem Umfang auftritt.

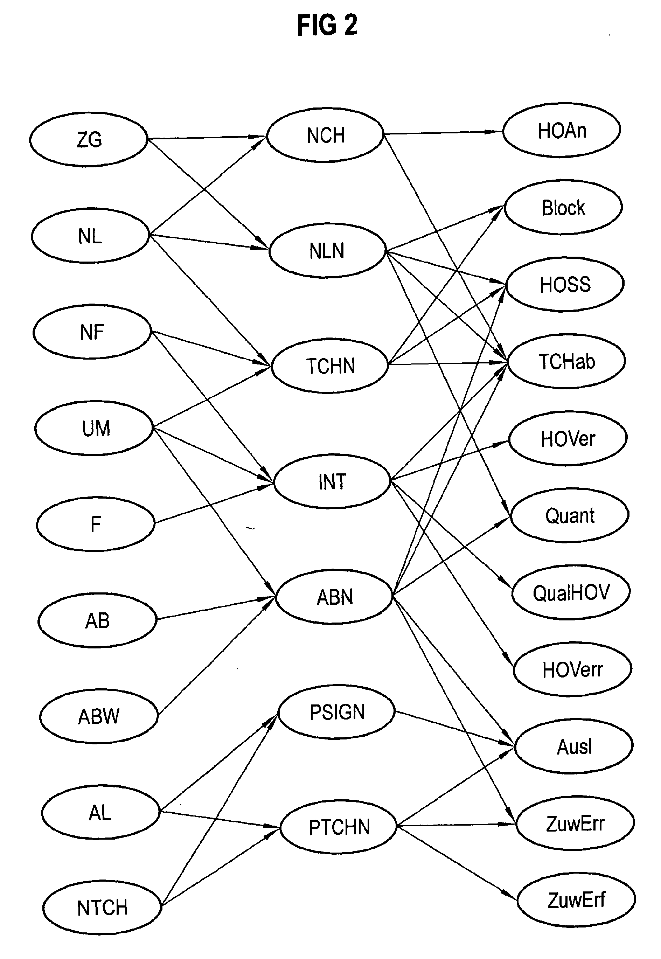

Figur 2 stellt graphisch ein Bayes'sches Netzwerk mit drei Gruppen von Prozessvariablen, welche in Spaltendarstellung untereinander angeordnet sind, für ein GSM-System dar. Alle Prozessvariablen beziehen sich auf eine bestimmte Zelle des GSM-Systems. Die linke Spalte enthält diejenigen Prozessvariablen, welche Systemeigenschaften beschreiben. Hierbei handelt es sich um
- die Zellgröße **ZG**,
- die Anzahl **NL** der Nachbarn, welche sich in der Nachbarnliste der Basisstation der Zelle befinden,
- die Anzahl **NF** der Frequenzbänder,
- den Umgebungstyp **UM**, z.B. Stadt, ländlich, etc.,
- die Frequenz **F**, 900 MHz oder 1800 MHz,
- den Abdeckungstyp **AB**, z.B. im Auto, in Gebäuden (indoor), außen (outdoor),
- die Abschätzung **ABW** der Zellenabdeckung,
- das Alter **AL** seit Installation der Basisstation,
- die Anzahl **NTCH** der zur Verfügung stehenden Verkehrskanäle, diese ist gleich Null, wenn die Zelle nicht aktiv ist.

In der mittleren Spalte stehen die Prozessvariablen, welche Störungen der Luftschnittstelle des GSM-Systems beschreiben:
- Prozessvariable "die Nachbarnliste enthält zu viele Elemente" **NLH**, d.h. es befinden sich Basisstationen in der Liste, welche keine Nachbarn der betrachteten Zelle darstellen,
- Prozessvariable "die Nachbarnliste enthält zu wenige Elemente" **NLN,** d.h. Basisstationen, welche Nachbarn der betrachteten Zelle darstellen, befinden sich nicht in der Liste,
- Prozessvariable "die Zelle hat zu wenige Verkehrskanäle zur Verfügung" **TCHN**, d.h. es werden mehr Verkehrkanäle angefordert als zur Verfügung stehen,
- Prozessvariable "die Interferenz ist zu hoch" **INT,**
- Prozessvariable "die Abdeckung ist zu niedrig" **ABN,** z.B. könnten in Teilen der Zelle aufgrund eines großen Gebäudes für Teilnehmerstationen keine Verbindung zum Kommunikationssystem möglich sein,
- Prozessvariable "es ist keine Übertragung auf Signalisierungskanälen möglich" **PSIGN**,
- Prozessvariable "es ist keine Übertragung auf einem Nicht-Signalisierungskanal möglich" **PTCHN,** d.h. auf einem Verkehrskanal

In der rechten Spalte befinden sich die Prozessvariablen, welche mit Ergebnissen von Messungen in Zusammenhang stehen:
- Prozessvariable "die normalisierte Verteilung der Handover Anfragen" **HOAn,**
- Prozessvariable "das Verkehrsaufkommen, welches nicht abgewickelt werden konnte" **Block,** z.B. durch Blockierung,
- Prozessvariable "der Anteil der Handover aufgrund von Aufwärts- (uplink-) und Abwärts- (downlink-) Signalstärke für Inter-Zell und Intra-BSC (BSC: Base Station Controller) Handover" **HOSS**,
- Prozessvariable "die Anzahl der abgebrochenen Verkehrskanäle innerhalb einer Stunde, bezogen auf ein Erlang" **TCHab**,
- Prozessvariable "die Häufigkeit der Handover Versuche innerhalb der Zelle bezogen auf eine Erlang-Stunde" **HOVer**,
- Prozessvariable "das 10%-ige Quantil des Empfangspegels in Abwärtsrichtung (downlink) für belegte Verkehrskanäle" **Quant,**
- Prozessvariable "die Häufigkeit eines Handovers aus Qualitätsgründen innerhalb einer BSC" **QualHOV**,
- Prozessvariable "die Häufigkeit der fehlgeschlagenen Handoverversuche innerhalb der Zelle bezogen auf eine Erlang-Stunde" **HOVerr,**
- Prozessvariable "die Auslastung der Verkehrskanäle bei einer zugelassenen Blockierung von 2%" **Ausl**,
- Prozessvariable "die Häufigkeit der fehlgeschlagenen Zuweisungsversuche für einen Verkehrskanal" **ZuwErr**,
- Prozessvariable "die Häufigkeit der erfolgreichen Zuweisungen für einen Verkehrskanal" **ZuwErf**.

Es ist in Figur 2 deutlich erkennbar, dass die Prozessvariablen nicht innerhalb der drei Gruppen voneinander abhängen, da sie nicht durch Pfeile verbunden sind. Die Variablen der zweiten, mittleren Gruppe werden direkt durch diejenigen der ersten, linken Gruppe beeinflusst. Weiterhin können die Variablen der dritten, rechten Gruppe als Symptom der Störungen, welche in der mittleren Gruppe stehen, betrachtet werden. Daher zeigen die Pfeile, welche die kausalen Beziehungen repräsentieren, von der linken Spalte zur mittleren Spalte und von der mittleren Spalte zur rechten Spalte.

Im folgenden soll der Fall betrachtet werden, dass der wahrscheinlichste Fehler in einer bestimmten Situation, in welcher sich eine Zelle des GSM-Systems befindet, bestimmt werden soll. Dies entspricht einer Schlussfolgerung in Rückwärtsrichtung. Die Situation der betrachteten Zelle des Funkkommunikationssystems ist durch die Parameter der Zelle, d.h. die Variablen der linken Spalte, und durch einige Messungen bestimmt. Mittels des erfindungsgemäßen Verfahrens werden dann die Wahrscheinlichkeiten für das Eintreten der einzelnen Fehler berechnet. Wird nun eine weitere Messung am Netzwerk durchgeführt, z.B. eine Messung der Häufigkeit der erfolgreichen Zuweisungen für einen Verkehrskanal ZuwErf, so werden die Wahrscheinlichkeiten für das Eintreten der Störungen erneut berechnet. Im genannten Beispiel ändert sich dann ausschließlich der Wert des Fehlers "es ist keine Übertragung auf einem Nicht-Signalisierungskanal, d.h. einem Verkehrskanal, möglich PTCHN". Somit kann iterativ der am wahrscheinlichsten auftretende Fehler bestimmt werden. Je mehr Messungen durchgeführt werden, umso exakter werde die Aussagen über die Fehlerwahrscheinlichkeiten, umso größer wird also die Wahrscheinlichkeit, dass das tatsächlich auftretende Problem identifiziert wird.

Eine Schlussfolgerung in Vorwärtsrichtung würde im Schema nach Figur 2 folgendermaßen ablaufen: es wird die Frage gestellt, welche Messungen am System durchgeführt werden müssten, um zu ermitteln, ob ein bestimmter Fehler im aktuellen Zustand auftritt oder nicht. Zur Lösung wird die Wahrscheinlichkeit für das Auftreten dieses Fehlers in der zweiten Spalte auf eins gesetzt. Nun ist nach erfolgter Berechnung gemäß dem erfindungsgemäßen Verfahren an den Wahrscheinlichkeitsverteilungen für die Variablen der rechten Spalte erkennbar, welche Messungen sinnvollerweise durchgeführt werden sollten. Ergibt die Berechung z.B. einen sehr hohen Wahrscheinlichkeitswert für ein bestimmtes Ergebnis einer der Variablen der rechten Gruppe, so kann mittels des Durchführens dieser Messung und dem Vergleich des Ergebnisses dieser Messung mit dem Ergebniswert, für welchen die große Wahrscheinlichkeit ermittelt wurde, mit großer Sicherheit festgestellt werden, ob die Störung tatsächlich vorliegt oder nicht.

## Patentansprüche

1. Verfahren zum Erfassen der Wahrscheinlichkeit für das Eintreten eines spezifischen Zustandes eines Funkkommunikationssystems, insbesondere einer Luftschnittstelle in dem Funkkommunikationssystem, über welche mindestens zwei Stationen per Funk kommunizieren, mit folgenden Verfahrensschritten:
(a) Belegen von
- Prozessvariablen eines wahrscheinlichkeitstheoretischen Modells in Form eines Bayes'schen Netzwerkes, wobei für jede Prozessvariable mindestens ein Zustand zugänglich ist, durch Informationen über die Luftschnittstelle des Funkkommunikationssystems und/oder Parameter der Luftschnittstelle des Funkkommunikationssystems, und
- bedingten Wahrscheinlichkeiten des Bayes'schen Netzwerkes durch Informationen über kausale Beziehungen zwischen Informationen über die Luftschnittstelle des Funkkommunikationssystems und/oder Parametern der Luftschnittstelle des Funkkommunikationssystems,
(b) Berechnung von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in einer kausalen Beziehung stehenden Prozessvariablen.

2. Verfahren nach Anspruch 1 **dadurch gekennzeichnet, dass** die Belegung nach Verfahrensschritt (a) unter Verwendung einer Datenbank (DB), "welche
- Informationen über die Luftschnittstelle des Funkkommunikationssystems und/oder
- Parameter der Luftschnittstelle des Funkkommunikationssystems und/oder
- Informationen über kausale Beziehungen zwischen diesen Informationen und/oder Parametern umfasst, stattfindet.

3. Verfahren nach Anspruch 2, **dadurch gekennzeichnet, dass** zur Erstellung der Datenbank (DB) eine erste graphische Benutzeroberfläche (GUI1) eingesetzt wird, welche Informationen über die Luftschnittstelle des Funkkommunikationssystems und/oder Parameter der Luftschnittstelle des Funkkommunikationssystems und/oder Wahrscheinlichkeitswerte zur Beschreibung von kausalen Beziehungen zwischen diesen Informationen und/oder Parametern abfragt.

4. Verfahren nach Anspruch 2 oder 3, **dadurch gekennzeichnet, dass** bei einer Veränderung in der Datenbank (DB) die Verfahrensschritte (a) und (b) erneut durchgeführt werden.

5. Verfahren nach einem der Ansprüche 1 bis 4, **dadurch gekennzeichnet, dass** die zur Berechnung der Wahrscheinlichkeiten nach Verfahrensschritt (b) verwendeten Informationen mit Hilfe einer zweiten graphischen Oberfläche (GUI3) abgefragt werden.

6. Verfahren nach Anspruch 5, **dadurch gekennzeichnet, dass** die zweite graphische Oberfläche (GUI3) eine graphische Darstellung des wahrscheinlichkeitstheoretischen Modells umfasst.

7. Verfahren nach Anspruch 5 oder 6, **dadurch gekennzeichnet, dass** bei einer Veränderung der mit Hilfe der zweiten graphischen Oberfläche (GUI3) abgefragten Informationen die Berechnung der Wahrscheinlichkeiten nach Verfahrensschritt (b) erneut abläuft.

8. Verfahren nach einem der Ansprüche 1 bis 4, **dadurch gekennzeichnet, dass** die zur Berechnung der Wahrscheinlichkeiten nach Verfahrensschritt (b) verwendeten Informationen vom Funkkommunikationssystem zur Verfügung gestellt werden.

9. Verfahren nach einem der Ansprüche 1 bis 8, **dadurch gekennzeichnet, dass** die Prozessvariablen zu mindestens einer Gruppe zusammengefasst werden, wobei die Prozessvariablen innerhalb der mindestens einen Gruppe nicht in kausaler Beziehung zueinander stehen.

10. Verfahren nach einem der Ansprüche 1 bis 8, **dadurch gekennzeichnet, dass** unter der Bedingung, dass bei der Belegung nach Verfahrensschritt (a) das Bayes'sche Netzwerk unterbestimmt ist, mindestens eine Gruppe von Prozessvariablen verwendet wird, welche Annahmen über die Luftschnittstelle des Funkkommunikationssystems beinhalten, aufgrund welcher das Bayes'sche Netzwerk vollständig bestimmt wird.

11. Verfahren nach einem der Ansprüche 1 bis 10, **dadurch gekennzeichnet, dass** die Prozessvariablen des wahrscheinlichkeitstheoretischen Modells drei Gruppen umfassen:
i. eine erste Gruppe mit Variablen, welche mindestens eine Eigenschaft der Luftschnittstelle des Funkkommunikationssystems beschreiben;
ii. eine zweite Gruppe mit Variablen, welche mindestens einen Fehler an der Luftschnittstelle beschreiben;
iii. eine dritte Gruppe mit Variablen, deren zugängliche Zustände aus Ergebnissen von mindestens einer Messungen am und/oder vom Funkkommunikationssystem gewonnen werden.

12. Verfahren nach Anspruch 11, **dadurch gekennzeichnet, dass** für die Variablen der zweiten Gruppe zwei Zustände zugänglich sind: ein Zustand für das Eintreten des Fehlers und ein Zustand für das Ausbleiben des Fehlers.

13. Verfahren nach einem der Ansprüche 11 oder 12, **dadurch gekennzeichnet, dass** die zur Berechnung der Wahrscheinlichkeiten nach Verfahrensschritt (b) verwendeten Informationen
- mindestens einen Wahrscheinlichkeitswert für mindestens einen zugänglichen Zustand von mindestens einer Variable der ii. Gruppe und/oder
- mindestens einen Wahrscheinlichkeitswert für mindestens einen zugänglichen Zustand von mindestens einer Variable der iii. Gruppe und/oder
- mindestens einen Ergebniswert von Messungen am und/oder vom Funkkommunikationssystem für mindestens eine Variable der iii. Gruppe
umfassen.

14. Verfahren nach einem der Ansprüche 9 bis 13, **dadurch gekennzeichnet, dass** nach der Berechnung der Wahrscheinlichkeiten nach Verfahrensschritt (b) eine Prozessvariable als Ergebnis ausgegeben wird, welche im Vergleich zu den weiteren Prozessvariablen der gleichen Gruppe den höchsten Wahrscheinlichkeitswert für einen ihres mindestens einen zugänglichen Zustand aufweist.

15. Verfahren nach einem der Ansprüche 9 bis 13, **dadurch gekennzeichnet, dass** nach der Berechnung der Wahrscheinlichkeiten nach Verfahrensschritt (b) eine Prozessvariable als Ergebnis ausgegeben wird, welche im Vergleich zu den weiteren Prozessvariablen der gleichen Gruppe den höchsten Wahrscheinlichkeitswert für einen bestimmten zugänglichen Zustand aufweist.

16. Verfahren nach einem der Ansprüche 1 bis 15, **dadurch gekennzeichnet, dass** nach der Berechnung der Wahrscheinlichkeiten nach Verfahrensschritt (b) abhängig von diesen Ergebnissen Maßnahmen ergriffen werden, welche einen Bericht an einen Netzwerkbetreiber und/oder Vorschläge bzw. Anweisungen zur Änderung der aktuellen Situation und/oder Vorschläge bzw. Anweisungen für Messungen am und/oder vom Kommunikationssystem umfassen.

17. Verfahren nach einem der Ansprüche 1 bis 16, **dadurch gekennzeichnet, dass** die Informationen über die Luftschnittstelle des Funkkommunikationssystems und die Parameter der Luftschnittstelle des Funkkommunikationssystems und die Informationen über kausale Beziehungen zwischen den Informationen über die Luftschnittstelle des Funkkommunikationssystems und/oder den Parametern der Luftschnittstelle des Funkkommunikationssystems sich auf genau eine Funkzelle des Funkkommunikationssystems beziehen.

18. Verfahren nach einem der Ansprüche 1 bis 17, **dadurch gekennzeichnet, dass** es auf das Auffinden bzw. die Detektion von Störungen an der Funkschnittstelle des Funkkommunikationssystems und die Klärung ihrer jeweiligen Ursachen angewendet wird.

19. Vorrichtung in einem Funkkommunikationssystem zum Erfassen der Wahrscheinlichkeit für das Eintreten eines spezifischen Zustandes des Funkkommunikationssystems, insbesondere einer Luftschnittstelle in dem Funkkommunikationssystem, über welche mindestens zwei Stationen per Funk kommunizieren, umfassend:
- Mittel zum Belegen von
• Prozessvariablen eines wahrscheinlichkeitstheoretischen Modells in Form eines Bayes'schen Netzwerkes, wobei für jede Prozessvariable mindestens ein Zustand zugänglich ist, durch Informationen über die Luftschnittstelle des Funkkommunikationssystems und/oder Parameter der Luftschnittstelle des Funkkommunikationssystems, und
• bedingten Wahrscheinlichkeiten des Bayes'schen Netzwerkes durch Informationen über kausale Beziehungen zwischen Informationen über die Luftschnittsteile des Funkkommunikationssystems und/oder Parameter der Luftschnittstelle des Funkkommunikationssystems,
- Mittel zum Berechnen von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in kausaler Beziehung stehenden Prozessvariablen.

20. Vorrichtung nach Anspruch 19, **dadurch gekennzeichnet, dass** sie eine Datenbank (DB), welche
- Informationen über die Luftschnittstelle des Funkkommunikationssystems und/oder
- Parameter der Luftschnittstelle des Funkkommunikationssystems und/oder
- Informationen über kausale Beziehungen zwischen diesen Informationen und/oder Parametern
umfasst, enthält.

21. Vorrichtung nach den Ansprüchen 19 oder 20, **dadurch gekennzeichnet, dass** eine Einrichtung zur Darstellung einer graphischen Benutzeroberfläche (GUI1, GUI2, GUI3) vorgesehen ist.

22. Computerprogrammprodukt zum Erfassen der Wahrscheinlichkeit für das Eintreten eines spezifischen Zustandes eines Funkkommunikationssystems, insbesondere einer Luftschnittstelle in dem Funkkommunikationssystem, über welche mindestens zwei Stationen per Funk kommunizieren, umfassend
- einen ersten Programmteil, welcher mittels einer ersten graphischen Benutzeroberfläche (GUI1) Informationen über die Luftschnittstelle des Funkkommunikationssystems und/oder Parameter der Luftschnittstelle des Funkkommunikationssystems und/oder Informationen über kausale Beziehungen zwischen Informationen über die Luftschnittsteile und/oder Parametern der Luftschnittstelle des Funkkommunikationssystems abfragt und sie dann in einer Datenbank (DB) ablegt,
- einen zweiten Programmteil, welcher unter Verwendung der im ersten Programmteil eingesetzten Datenbank (DB) Prozessvariablen eines wahrscheinlichkeitstheoretisches Modells in Form eines Bayes'schen Netzwerkes, wobei für jede Prozessvariable mindestens ein Zustand zugänglich ist, durch Informationen über die Luftschnittstelle des Funkkommunikationssystems und/oder durch Parameter der Luftschnittstelle des Funkkommunikationssystems belegt, und bedingte Wahrscheinlichkeiten des Bayes' schen Netzwerkes durch Informationen über kausale Beziehungen zwischen Informationen über die Luftschnittstelle des Funkkommunikationssystems und/oder Parametern der Luftschnittstelle des Funkkommunikationssystems belegt, und gegebenenfalls
- einen dritten Programmteil, welcher das in zweiten Programmteil bearbeitete wahrscheinlichkeitstheoretische Modell mittels einer zweiten graphischen Benutzeroberfläche (GUI2) visualisiert und Eingaben des Benutzers zur Veränderung des Inhaltes der im ersten Programmteil eingesetzten Datenbank zulässt, und
- einen vierten Programmteil, welcher eine Berechnung von Wahrscheinlichkeiten mit Hilfe des wahrscheinlichkeitstheoretischen Modells unter Verwendung von Informationen bezüglich mindestens einer Prozessvariablen für den mindestens einen zugänglichen Zustand der mit der mindestens einen Prozessvariablen in kausaler Beziehung stehenden Prozessvariablen durchführt.

23. Computerprogrammprodukt nach Anspruch 22, **dadurch gekennzeichnet, dass** die im vierten Programmteil verwendeten Informationen bezüglich der mindestens einen Prozessvariablen mittels einer dritten graphischen Benutzeroberfläche (GUI3) abgefragt werden.
